## Europäisches Patentamt
## European Patent Office
## Office européen des brevets

(11) Publication number: **0 017 258**
**B1**

(12) **EUROPEAN PATENT SPECIFICATION**

(45) Date of publication of patent specification: **11.05.83**

(51) Int. Cl.³: **B 60 C 9/06**

(21) Application number: **80101930.8**

(22) Date of filing: **10.04.80**

(54) **Improved radial tyres provided with a stiffening structure in the sidewalls.**

(30) Priority: **10.04.79 IT 2170879**

(43) Date of publication of application:
**15.10.80 Bulletin 80/21**

(45) Publication of the grant of the patent:
**11.05.83 Bulletin 83/19**

(84) Designated Contracting States:
**BE DE FR GB LU NL**

(56) References cited:
**DE - A - 1 680 429**
**FR - A - 2 130 097**
**FR - A - 2 261 888**
**FR - A - 2 325 524**
**FR - A - 2 347 214**
**FR - A - 2 386 423**
**LU - A - 77 020**

(73) Proprietor: **SOCIETA PNEUMATICI PIRELLI S.p.A.**
**Piazzale Cadorna, 5**
**I-20123 Milan (IT)**

(72) Inventor: **Mezzanotte, Mario**
**Via Argelati, 28**
**Milan (IT)**
Inventor: **Turchetti, Gianni**
**Via Aldo Villa, 6**
**Bresso Milan (IT)**

(74) Representative: **Gernhardt, Claus, Dipl.-Ing. et al,**
**Dr. Elisabeth Jung Dr. Jürgen Schirdewahn Dipl.-Ing. Claus Gernhardt Patentanwälte**
**Clemensstrasse 30**
**D-8000 München 40 (DE)**

Courier Press, Leamington Spa, England

Improved radial tyres provided with a stiffening structure in the sidewalls

This invention concerns radial tyres i.e. those tyres provided with a carcass formed by cords lying in radial planes, or forming small angles with said planes. And more particularly, this invention concerns an improvement that has been carried out to the stiffening structure in the sidewalls of this type of tyre.

It is already 'known' that tyres having a radial carcass have to be endowed with a reinforcing structure that is circumferentially in-extensible and disposed between carcass and tread — for the purpose of resisting both, the forces due to the pressure within the tyres as well as the tractional and compressional stresses to which the tyre is subjected during exercise; these stresses resulting as being particularly high when such tyres are destined for heavy service duty at high speeds — such as, for example, sports-car tyres. In particular, a reinforcing structure that is particularly apt for those tyres destined to give a high performance, is a structure which is comprised by a couple of metallic cord layers having cords inclined at quite a low angle (between 10°—35°) as with respect to the equatorial plane of the tyre, and over which there is disposed a layer of nylon cord orientated according to the tyre's circumferential direction.

The results obtained with this type of tyre, prove to be really considerable — particularly as regards safety and the qualities of good road-behaviour in the tyre, even under critical or extreme road conditions.

On the other hand, as regards the tyre sidewalls, radial tyres are 'known' to have a high degree of flexibility in every direction — i.e. in the radial, the transversal, as well as in the circumferential senses. Now, the flexibility, in the radial direction of the tyre, constitutes an advantage because, thanks to this, there is originated a good riding comfort; whereas a transversal flexibility causes the disadvantage of having an excessive deformation in the tyre that is subjected to stresses in the perpendicular direction of its equatorial plane — as for example, when in cases of road drifting, or in a curved trajectory, or due to lateral windthrusts.

It can so happen that, under these conditions, the excessively deformed tyre may travel with its flanks directly in contact with the ground — thus involving the risk of damaging the tyre and, in any case, compromising the road-grip and the service life of the tyre itself.

As for the flexibility in the circumferential sense, there is caused a lag in tyre-response during any sudden acceleration and/or deceleration, apart from the fact of there occurring excessive and damaging deformations to the structure, in this sense.

Hence, there arises the need for stiffening the radial tyre sidewalls, but with keeping in mind nevertheless, that a too rigid type of reinforcing structure only brings about other drawbacks — such as, for example, a loss in the stability and riding-comfort — due in particular, to a lack of a cushioning effect for the stresses caused by the presence of irregularities in the ground itself.

For the purpose of stiffening the sidewalls, and, at the same time, for safeguarding the desired flexibility, many solutions have been proposed — which generally consist of introducing — inside the lower sidewall portion, and in a position axially outside to the carcass turn-ups — strips of textile and/or metallic cords that are variably inclined, in some cases also wrapped around the beads (to form the so-called "flippers"), and which extend radially from the bead zone up to about half of the section height of the tyre, in this way improving the transversal rigidity of the tyre — without causing any substantial detriment to the radial flexibility of the sidewalls.

Besides the usage of these generic structural characteristics, the Applicant has already realized with favourable results other tyres which comprise in their sidewalls strips of either textile or metallic cords, inclined with respect to the circumferential line of the tyre (they may also be doubled-up by being folded over) and extending from the bead cores up to the tyre shoulders, or even for being inserted between the belt layers.

Further there is already known by FR—A—2 325 524 of the same Applicant a tyre comprising in each sidewall a strip of textile cords, doubled-up over itself in such a way as to present two skirts having different widths. The cords of the strip are inclined with respect to the radial direction of the tyre. In each sidewall of the tyre the greater width of the strip is disposed axially outsdie the carcass ply and its turn-up and is radially extended from the bead zone up to the tyre shoulder.

In this way the tyres result as having quite considerable and improved behaviour characteristics also under abnormal running conditions, in particular, under high speed running conditions.

Nevertheless, it has also been found by the Applicant himself, that these types of tyres, when destined for running at high speeds in race-tracks (at velocities of about 250 km/h and over) are nevertheless susceptible to improvements, in particular, as far as regards the transversal and the circumferential rigidity of the carcass, and also as regards the sensibility to driving and to prompt steering response.

Hence, what forms the object of this invention is a tyre for vehicle wheels that comprises a radial carcass provided with beads for being assembled onto a corresponding mounting rim, a tread and an annular reinforcing structure inserted between the said carcass and said tread being substantially circumferentially in- extensible and being at least as wide as the tread, said carcass being comprised by at least one ply of textile or metallic cords lying in substantially radial planes and extending from one bead to another, and turned-up from the inside towards the outside of the tyre, around a bead core contained in each bead, said tyre comprising in each sidewall a strip of textile cords doubled-up over itself in such a way as to present two skirts having different widths, the cords of said skirts being inclined with respect to the radial direction of the carcass cords, said greater width skirts being disposed axially outside of said carcass ply and its turn-up and being radially extended from the bead zone up to the said tyre shoulder, said tyre being characterized in that it comprises in each sidewall a mixed textile-metallic reinforcement comprised by said strip of textile cords doubled-up over itself and by a strip of metallic cord also inclined with respect to said radial direction and having a lesser width to that of said greater width skirt and inserted inbetween said skirts up to the folded edge of said skirts, said mixed textile-metallic reinforcement being arranged in each sidewall in such a way that the lesser width skirt extends radially towards the inside from said shoulder to a point situated in the sidewall at a height comprised between 66% and 20% of the tyre's section height, and said metallic cord strip extends from the folded edge of said textile strip to a point situated at a height comprised between 50% and 20% of the section height of the tyre.

According to a convenient form of realization of this invention, the nylon textile cords of said skirts are symmetrically inclined with respect to the radial direction of the carcass cord and at an angle comprised between 15° and 45°, and in particular at 25°. Also the cords of the metal strip are inclined with respect to the said radial direction and at an angle comprised between 15° and 45° and in particular identical (25°) to that of the textile cords. These metallic cords are moreover, constituted of metallic wires having diameters in the range between 0.12 and 0.25 mm, and in particular, equal to 0.12 mm.

As regards the position of the skirts in the tyre sidewall, the greater width skirt is situated axially outside, not only of the carcass ply and its turn-up, but also of all the other reinforcements (either textile or metallic) that are situated in the bead-heel. The skirt having a lesser width, is moreover, axially outside of the greater skirt. From this, it results that the metallic strip is axially outside the said greater skirt. The mixed reinforcement, just described above, is also conveniently protected towards the outside — in consideration of possible accidental injuries occurring to the sidewall — by means of a woven-fabric chafer strip overlapping the radially inner margin of the lesser skirt, and extending from the zone of this overlapping up to the tyre bead, where it is wound, from the outside towards the inside, around the bead core. In preference, the reinforcing cords of said woven-fabric chafer strip, are inclined substantially at 45° with respect to the radial direction of the carcass cords, but they can nevertheless be inclined at any desired angle.

Finally, quite advantageously, the said mixed reinforcement is connected to the annular structure by means of a small textile cord strip (opportunely, nylon cord) disposed axially outside to both, namely to the annular structure, as well as to the mixed reinforcement, and with being wide enough for overlapping both of these said structures. The cords of this small strip are conveniently orientated with respect to the radial direction of the carcass cord, at an angle comprised between 90° and 45° — and in particular, at 80°.

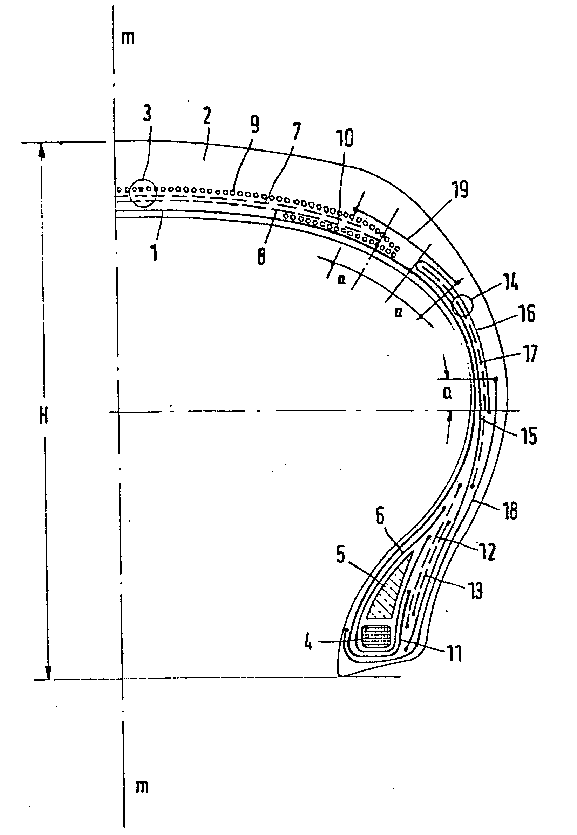

The invention will be better understood by the following description and the attached figure (given only by way of non-limiting example) that illustrates an advantageous realization of a tyre according to the invention, in a cross-section with regard to the radial plane, and limited to one-half with regard to the tyre's equatorial plane m—m, the said tyre being symmetrical with respect to the said plane.

Hence, as was previously described, the tyre comprises a radial type of carcass, comprised by at least one ply 1 of cords lying in radial planes in the tyre, a tread 2, and an annular reinforcing structure 3, substantially inextensible circumferentially, and which in future in this text is simply referred to as the "belt".

The carcass ply 1 extends from one bead to the other, with being turned-up in each bead, from the inside towards the outside of the tyre, around the bead core 4, said circumferentially inextensible core 4 guaranteeing the anchoring of the tyre onto its respective mounting rim (not illustrated).

Over the said bead core 4, there is placed a filler 5, made of rubber having a hardness greater than 70° Shore-A, and around the beadcore-filler-assembly is wound a flipper 6 realized with a ply of nylon cords inclined at an angle having a value selected between 30° and 45°. with respect to the radial direction of the carcass cords.

The belt 3, according to an already well-known structure, comprises two layers 7 and 8 of metallic cords which in each layer are disposed parallel to each other, which cross the metallic cords of the adjacent layer — and which are inclined symmetrically with respect to the tyre's equatorial plane at an angle having a low value — i.e. comprised between 10° and 35°.

In a radially outer position to said two layers 7, 8, there is disposed a third layer 9 of cords made of a material which shrinks in length under the effects of heat i.e. for example, nylon, said cords being orientated according to the longitudinal direction of the tyre, and with said layer 9 being conveniently extended axially towards the outside beyond the underlying layers 7 and 8.

In its whole, the belt 3 has substantially the same width as the tread 2, i.e. as that portion of the tyre's radially external surface that under normal straight running conditions is always in contact with the ground. Besides this, quite conveniently, the belt 3 is provided at either of its extremities, with further small strips 10, made of the very same cords as the layer 9 and being equally orientated according to the longitudinal direction, with the said small strips 10 being disposed in a radially inner position with respect to the remaining belt layers. It is clear that these small strips 10 can quite easily be realized by turning-up the textile layer 9 (made of a convenient width) axially towards the inside, and around the two metallic cord layers 7, 8. The cited small strips 10 have manifested to be extremely useful in impeding any detaching of the extremities of the metallic cord layers 7, 8 from the surrounding rubber. Said detaching may otherwise occur during running at high speeds, as a consequence of the phenomena that are well-known to technicians as the "dynamic wave", the "out limit" or the so-called "plate effect".

In an equally 'known' way, the tyre beads illustrated, are reinforced by two strips 12, 13 of metallic cords, disposed in axially outer positions with respect to the turn-ups 11 of the carcass plies.

The axially innermost strip 12, is comprised by metallic cords that are inclined with respect to the circumferential direction of an angle variable between 5° and 15° when passing from the bead zone at the radially outer edge; said strip 12 being preferably disposed in correspondence of the neutral flexional axis.

The axially outermost strip 13, is — in its turn, comprised by metallic cords of the HE type (High Elongation), disposed at 90°, i.e. according to the radial direction parallel to the carcass.

Coming now to the tyre sidewalls, quite advantageously and according to the invention, these are stiffened by means of a mized textile-metallic reinforcement. This reinforcement 14 consists of a doubled-up nylon-cord fabric strip disposed in the tyre shoulder zone — so as to originate two skirts, each one having a different width, with the greater width skirt 15 extending radially towards the inside from said shoulder to the lower end of the bead zone; and with the lesser width skirt 16 extending radially towards the inside, from the shoulder to a point situated at a height comprised between 66% and 20% of the section height H of the tyre.

Within the flipper comprised by the two skirts 15 and 16 and contacting the folded edge thereof there is disposed a further strip 17 of metallic cords that extend radially towards the inside beyond the lower edge of the lesser width skirt to a point situated at a height comprised between 50% and 20% of the section height H of the tyre.

The textile cords of the two skirts 15, 16 are inclined in the opposite sense with respect to the radial direction of the carcass cords, owing to the folding of the strip, and in particular, they are symmetrically inclined at an angle within a preferred range of 15° and 45° and more preferred at an angle of 25°.

Also the metallic cords of the strip 17 are inclined with respect to the radial direction of the carcass cords, and in particular at the same angle of 25° — likewise comprised within the preferred range of 15° and 45°.

These metallic cords are also rather thin in such a way as not to sensibly influence the flexibility of the sidewall in the radial direction, and for the purpose of maintaining a good degree of riding-comfort. In practice, it is best for the diameter of the individual metallic wires that go to form the cord, to be comprised between 0.12 and 0.25 mm.

By way of example: for the type of tyre illustrated in the drawing there have been utilized to advantage 1 × 4 × 0.12 cords (single component strand of four wires each having a diameter of 0.12 mm) and 3 × 3 × 0.12 cords.

As far as specifically concerns the realization of the said mixed reinforcement, in a brilliant version of the tyre, as illustrated in the drawing, the greater width skirt 15 is in a position that is axially outer to the turn-up of the carcass ply, as well as to the metallic strips 12 and 13 of the bead reinforcement; and the lesser width skirt 16 and consequently also the strip 17, are in an axially outer position with respect to the greater width skirt 15.

It was found possible moreover, to further improve the structure illustrated here, by having a protection against any accidental damages by means of disposing, towards the outside of the sidewall in the lower half of the sidewall and precisely in the axially outermost position, a chafer strip 18 made of a woven fabric — i.e. with 'warp-and-weft' reinforcing cords that are criss-crossed together at substantially 90°. To be more precise, the 'warp' cords are those cords that are disposed longitudinally in the piece of fabric, whilst the 'weft' cords are those cords that are disposed transversally.

This chafer strip 18 extends from the lower edge of the lesser width skirt 16 of the mixed reinforcement 14, over which it is superimposed, to the bead zone, where it is turned-up, from outside towards inside, around the bead core. The cords of this chafer strip 18 are suitably of nylon, and the 'warp' cords are inclined at an angle of substantially 45° with respect to the radial direction of the carcass cords, but they can, however, be inclined at any desired angle.

Besides this, there is shown a quite convenient connection between the said mixed reinforcement 14 and the belt 3, through the use of a small strip 19 of textile cords disposed in the tyre shoulder in an axially outer position with regard to the belt 3, as well as to the mixed reinforcement 14. Said strip 19 has a width that is sufficient for superimposing both of these above-said structures 3 and 14. As regards this, it is also well to explain here, that according to what has been illustrated in the drawing, the linear development of the overlapping distances "a" of the strip 19 at the belt 3 (in the radially external position), and at the mixed reinforcement 14 (in the radially internal position) and of the woven chafer strip 18 at the skirt 16 have at least the usual dimensions for overlapping of the different strips in the tyre technology, i.e. dimensions in the order of about 10 mm, independently of the carcass dimensions, at least as far as regards the field of car tyres. Concerning the inclination of the cords of the small strip 19, with respect to the radial direction of the carcass cords, it is best for this inclination to be comprised between 90° and 45° (this inclination — for the tyre herein described and illustrated, being at 80°).

Above all, the purpose of the strip 19 is to grade, with continuity, the existing variations in the rigidity — i.e. passing from the belt extremity to the tyre shoulder, and once again, from the shoulder zone to the upper extremity of the sidewall in correspondence of the folding in the reinforcement 14. This being apart from the purpose of serving, jointly with the carcass ply, for resisting the flexional stresses which result as being concentrated here, i.e. in the shoulder zone, comprised between the belt 3 and the reinforcement 14 due to the greater rigidity of these above-said two structures with respect to that of the single carcass ply.

Furthermore, said greater flexibility in the tyre shoulder zone, has been deliberately created for the purpose of disconnecting the tread 2 from the sidewalls, for, in this way consenting these two tyre portions to have quite different and precisely foreseen road-behaviour characteristics, and especially in the presence of any forces that are perpendicularly directed at the equatorial plane of the tyre.

A tyre according to the invention, in fact, has shown itself to possess excellent road-behaviour qualities both at high speeds and under critical conditions such as in race-tracks for sports cars, and has also demonstrated in particular a high sensibility to steering response with high handling characteristics being verified during exercise.

## Claims

1. A tyre for vehicle wheels, comprising a radial carcass (1) provided with beads (4) for being assembled onto a corresponding mounting rim, a tread (2) and an annular reinforcing structure (3) inserted between the said carcass and said tread being substantially circumferentially inextensible and being at least as wide as the tread, said carcass being comprised by at least one ply (1) of textile or metallic cords lying in substantially radial planes and extending from one bead to another, and turned-up from the inside towards the outside of the tyre, around a bead core contained in each bead, said tyre comprising in each sidewall a strip of textile cords doubled-up over itself in such a way as to present two skirts (15, 16) having different widths, the cords of said skirts being inclined with respect to the radial direction of the carcass cords, said greater width skirts (15) being disposed axially outside of said carcass ply and its turn-up and being radially extended from the bead zone up to the said tyre shoulder, said tyre being characterized in that it comprises in each sidewall a mixed textile-metallic reinforcement (14) comprised by said strip of textile cords doubled-up over itself and by a strip (17) of metallic cord also inclined with respect to said radial direction and having a lesser width to that of said greater width skirt (15) and inserted inbetween said skirts (15, 16) up to the folded edge of said skirts, said mixed textile-metallic reinforcement being arranged in each sidewall in such a way that the lesser width skirt (16) extends radially towards the inside from said shoulder to a point situated in the sidewall at a height comprised between 66% and 20% of the tyre's section height (H), and said metallic cord strip (17) extends from the folded edge of said textile strip (15, 16) to a point situated at a height comprised between 50% and 20% of the section height (H) of the tyre.

2. A tyre according to claim 1, characterized by the fact that the said mixed textile-metallic reinforcement comprises textile cords of said skirts (15, 16) symmetrically inclined with respect to the radial direction of the carcass cords at an angle comprised between 15° and 45°.

3. A tyre according to claim 1 or 2, characterized by the fact that the metallic cords (17) of said mixed reinforcement (14) are inclined with respect to the radial direction of the carcass cords at an angle comprised between 15° and 45°.

4. A tyre according to any one of claims 1 to 3, characterized by the fact that the metallic cords of the said mixed reinforcement (14) are constituted by metallic wires having a diameter comprised between 0.12 mm and 0.25 mm.

5. A tyre according to any one of claims 1 to 4, characterized by the fact that in said mixed textile-metallic reinforcement the greater width skirt (15) is disposed axially outside of any of the other reinforcing strips present in the bead.

6. A tyre according to any one of claims 1 to 5, characterized by the fact that in said mixed textile-metallic reinforcement the lesser width skirt (16) lies axially outside of the said greater width skirt (15).

7. A tyre according to claim 6, characterized by the fact that said mixed reinforcement (14) is protected in the axially outward position by a chafer strip (18) of a woven fabric overlapping the radially inner edge of said lesser width skirt (16) and extending from said overlapped zone to the bead and turning-up axially from outside towards inside around said bead core.

8. A tyre according to any one of claims 1 to 7, characterized by the fact that said mixed reinforcement (14) is connected with said annular reinforcing structure (3) by means of a strip (19) of textile cord disposed axially outside of said annular structure and of said mixed reinforcement, and having a width such as to overlap with its radially external portion the edge of said annular structure, and with its radially inner portion the folded edge of said mixed reinforcement.

9. A tyre according to claim 8, characterized by the fact that the textile cords of said strip (19) are inclined with respect to the radial direction of the carcass cords, at an angle comprised between 90° and 45°.

**Revendications**

1. Pneumatique pour roues de véhicule, comprenant une carcasse radiale (1) pourvue de talons (4) à monter sur une jante correspondante, une bande de roulement (2) et une structure annulaire de renforcement (3) inserée entre ladite carcasse et ladite bande, substantiellement inextensible sur la circonférence et au moins aussi large que la bande, ladite carcasse comprise par au moins un plis (1) de cordes textiles ou métalliques disposées sur des plans substantiellement radiales et s'étendant d'un talon à l'autre, et retourné de l'intérieur vers l'extérieur du pneumatique, autour d'un noyau de talon contenu dans chaque talon, ledit pneu comprenant dans chaque flanc un ruban de cordes textiles se repliant sur soi-même de façon à présenter deux pans (15, 16) de largeur différente, les cordes de ces pans étant inclinés par rapport à la direction radial des cordes de la carcasse, ces pans plus larges (15) étant disposés axialement à l'extérieur du plis de la carcasse ci-dessus et de son retournement et s'étendant radialement de la zone du talon jusqu'à l'épaule de ce pneumatique, ledit pneu étant caractérisé par le fait qu'il comprend dans chaque flanc un renforcement mixte textilemétallique (14) compris par ledit ruban de cordes textiles replié sur soi-même et un ruban (17) de corde métallique, lui-même incliné par rapport à la direction radiale susmentionnée et ayant une largeur inférieure à celle dudit pan plus large (15) et incerée entre les pans susdits (15, 16) jusqu'au bord replié de ces pans, ledit renforcement mixte textile-métallique est desposé dans chaque flanc de façon que le pan moins large (16) s'étende radialement vers l'intérieur à partir de ledit épaule jusqu'un point situé dans le flanc à une hauteur comprise entre 66% et 20% de l'hauteur de la section (H) du pneumatique, ledit ruban (17) de corde métallique s'étendant du bord replié de ledit ruban textile (15, 16) jusqu'un point situé à une hauteur comprise entre 50% et 20% de l'hauteur (H) de la section du pneumatique.

2. Pneumatique conformément à la révendication 1, caractérisé par le fait que ledit renforcement mixte textilemétallique comprend des cordes textiles de lesdit pans (15, 16) inclinés symétriquement par rapport à la direction radiale des cordes de la carcasse, en un angle compris entre 15° et 45°.

3. Pneumatique conformément à la révendication 1 ou à la revendication 2, caractérisé par le fait que les cordes métalliques (17) de ledit renforcement mixte (14) sont inclinées par rapport à la direction radiale des cordes de la carcasse, en un angle compris entre 15° et 45°.

4. Pneumatique conformément à une quelconque des révendications de 1 à 3, caractérisé par le fait que les cordes métalliques de ledit renforcement mixte (14) consistent de fils métalliques ayant un diamétre compris entre 0,12 mm et 0,25 mm.

5. Pneumatique conformément à une quelconque des révendications de 1 à 4, caractérisé par le fait que dans ledit renforcement mixte textile-métallique le pan plus large (15) est disposé axialement à l'extérieur d'un quelconque des rubans de renforcement présent dans le talon.

6. Pneumatique conformément à une quelconque des révendications de 1 à 5, caractérisé par le fait que dans ledit renforcement mixte textile-métallique le pan moins large (16) est disposé axialement à l'extérieur dudit pan plus large (15).

7. Pneumatique conformément à la révendication 6, caractérisé par le fait que ledit renforcement mixte (14) est protégé en correspondance de la position axialement extérieur par une nappe de sommet (17) en tissu contre l'abrasion superposant le bord radialement intérieur de ledit pan moins large (16) et s'étendant de cette zone superposée jusqu'au talon et se retournant axialement de l'extérieur vers l'intérieur autour de ledit noyau du talon.

8. Pneumatique conformément à une quelconque des révendications de 1 à 7, caractérisé par le fait que ledit renforcement mixte (14) est connecté avec ladite structure annulaire de renforcement (3) par un ruban (19) de corde textile disposé axialement à l'extérieur de ladite structure annulaire et de ledit renforcement mixte, et ayant une largeur telle à lui permettre de superposer avec sa portion radialement extérieure le bord de ladite structure annulaire et avec sa portion radialement intérieure le bord replié de ledit renforcement mixte.

9. Pneumatique conformément à la révendication 8, caractérisé par le fait que les cordes textiles de ledit ruban (19) sont inclinées par rapport à la direction radiale des cordes de la carcasse, en un angle compris entre 90° et 45°.

**Patentansprüche**

1. Reifen für Fahrzeugräder, mit einer radialen Karkasse (1), die mit Wulsten (4) versehen ist für Montage an einer entsprechenden Montagefelge, einem Laufstreifen (2) und mit einem ringförmigen Verstärkungsgebilde (3), welches zwischen der Karkasse und dem Laufstreifen eingesetzt ist, in Umfangsrichtung im wesentlichen undehnbar ist und welches wenigstens so breit wie der Laufstreifen ist, wobei die Karkasse wenigstens eine Lage (1) aus Textilschnüren oder Metallschnüren aufweist, die in im wesentlichen radialen Ebenen liegen und sich von einem Wulst zu dem anderen erstrecken sowie mit Bezug auf den Reifen von innen nach außen um einen Wulstkern herumgelegt sind, der in jedem Wulst enthalten ist, der Reifen in jeder Seitenwand ein Textilschnurband aufweist, welches derart auf sich selbst gelegt ist, daß zwei Streifen (15, 16) unterschiedlicher Breite dargeboten sind, die Schnüre der Streifen mit Bezug auf die radiale Richtung der Karkassenschnüre schräg angeordnet sind, die Streifen (15) größerer Breite axial außerhalb der Karkassenlage und deren um den Wulstkern herumgelegten Teils angeordnet sind und sich von der Wulstzone bis zur Reifenschulter erstrecken, und wobei der Reifen dadurcdh gekennzeichnet ist, daß er in jeder Seitenwand eine gemischte Textil-Metall-Verstärkung (14) aufweist, die von dem Textilschnurband, das auf sich selbst gelegt ist, und von einem Metallschnurstreifen (17) umfaßt ist, der ebenfalls mit Bezug auf die genannte radiale Richtung schräg verläuft und eine Breite hat, die kleiner als die Breite des Streifens (15) größerer Breite ist sowie zwischen die Streifen (15, 16) bis zu der umgelegten Kante der Streifen eingesetzt ist, die gemischte Textil-Metall-Verstärkung in jeder Seitenwand derart angeordnet ist, daß der Streifen (16) kleinerer Breite sich radial einwärts von der Schulter bis zu einer Stelle erstreckt, die in der Seitenwand auf einer Höhe zwischen 66% und 20% der Querschnittshöhe (H) des Reifens liegt, und daß der Metallschnurstreifen (17) sich von der umgelegten Kante des Textilbandes (15, 16) bis zu einer Stelle erstreckt, die auf einer Höhe zwischen 50% und 20% der Querschnittshöhe (H) des Reifens liegt.

2. Reifen nach Anspruch 1, dadurch gekennzeichnet, daß die gemischte Textil-Metall-Verstärkung Textilschnüre der Streifen (15, 16) umfaßt, die mit Bezug auf die radiale Richtung der Karkassenschnüre symmetrisch in einem Winkel zwischen 15° und 45° schräg liegen.

3. Reifen nach Anspruch 1 oder 2, dadurch gekennzeichnet, daß die Metallschnüre (17) der gemischten Verstärkung (14) mit Bezug auf die radiale Richtung der Karkassenschnüre in einem Winkel zwischen 15° und 45° schräg liegen.

4. Reifen nach irgendeinem der Ansprüche 1 bis 3, dadurch gekennzeichnet, daß die Metallschnüre der gemischten Verstärkung (14) durch Metalldrähte dargestellt sind, die einen Durchmesser zwischen 0,12 und 0,25 mm haben.

5. Reifen nach irgendeinem der Ansprüche 1 bis 4, dadurch gekennzeichnet, daß in der gemischten Textil-Metall-Verstärkung der Streifen (15) größerer Breite axial außerhalb irgendeines der anderen Verstärkungsbänder angeordnet ist, die in dem Wulst vorhanden sind.

6. Reifen nach irgendeinem der Ansprüche 1 bis 5, dadurch gekennzeichnet, daß in der gemischten Textil-Metall-Verstärkung der Streifen (16) kleinerer Breite axial außerhalb des Streifens (15) größerer Breite liegt.

7. Reifen nach Anspruch 6, dadurch gekennzeichnet, daß die gemischte Verstärkung (14) in der axial äußeren Lage durch einen Schutzstreifen (18) aus einem Webstoff geschützt ist, der die radial innere Kante des Streifens (16) kleinerer Breite überlappt und sich von der Überlappungszone zu dem Wulst erstreckt und axial von außen nach innen um den Wulstkern herumgelegt ist.

8. Reifen nach irgendeinem der Ansprüche 1 bis 7, dadurch gekennzeichnet, daß die gemischte Verstärkung (14) mit dem ringförmigen Verstärkungsgebilde (3) mittels eines Streifens (19) aus Textilschnüren verbunden ist, der axial außerhalb des ringförmigen Gebildes und der gemischten Verstärkung angeordnet ist und eine Breite hat derart, daß er mit seinem radial äußeren Teil die Kante des ringförmigen Gebildes, und mit seinem radial inneren Teil die umgelegte Kante der gemischten Verstärkung überlappt.

9. Reifen nach Anspruch 8, dadruch gekennzeichnet, daß die Textilschnüre des Streifens (19) mit Bezug auf die radiale Richtung der Karkassenschnüre in einem Winkel zwischen 90° und 45° schräg liegen.